Europäisches Patentamt

European Patent Office

Office européen des brevets

(19)

(11) Veröffentlichungsnummer: **0 104 420**

**A1**

(12) **EUROPÄISCHE PATENTANMELDUNG**

(21) Anmeldenummer: 83108241.7

(22) Anmeldetag: 22.08.83

(51) Int. Cl.³: **F 16 K 17/19**
**F 01 M 13/00**

(30) Priorität: 04.09.82 DE 3232902

(43) Veröffentlichungstag der Anmeldung:
04.04.84 Patentblatt 84/14

(84) Benannte Vertragsstaaten:
AT BE CH DE FR GB IT LI LU NL SE

(71) Anmelder: Stegemann, Eberhard
Försterweg 202
D-3216 Salzhemmendorf 4(DE)

(72) Erfinder: Stegemann, Eberhard
Försterweg 202
D-3216 Salzhemmendorf 4(DE)

(74) Vertreter: Eikenberg & Brümmerstedt Patentanwälte
Schackstrasse 1
D-3000 Hannover 1(DE)

(54) Vorrichtung zur Be- und Entlüftung von geschlossenen Behältern oder Gehäusen.

(57) Es wird eine Vorrichtung zur Be- und Entlüftung von geschlossenen Flüssigkeits- und Feststoffbehältern oder geschlossenen Gehäusen (5) von Aggregaten aller Art unter Verwendung einer in eine Öffnung des Behälters bzw. des Gehäuses einsetzbaren, mit einem Adsorptionsmittel gefüllten Patrone (1) angegeben, bei der zwischen dem Behälter bzw. dem Gehäuse einerseits und der Patrone andererseits ein Ventil-Adapter (2) angeordnet ist, der in einem ein zentrales Rohr (22) umgebenden Ringraum getrennte Ventile (9,26) für die Be- und Entlüftung enthält, die mit dem Inneren des Behälters bzw. Gehäuses derart in Verbindung stehen, daß das gesamte, in den Behälter einströmende Medium die Patrone durchströmen muß, während das ausströmende Medium, ohne die Patrone zu belasten, aus dem Ventil-Adapter direkt entweicht. Hierdurch wird eine vielseitige Anwendungsmöglichkeit erschlossen und zugleich eine lange Betriebszeit bis zu einer erforderlich werdenden Regenerierung des Adsorptionsmaterials gewährleistet.

Fig. 1

EP 0 104 420 A1

0104420

Dipl.-Ing. Eberhard Stegemann

594/1 EU

## Vorrichtung zur Be- und Entlüftung von geschlossenen Behältern oder Gehäusen

Die Erfindung betrifft eine Vorrichtung zur Be- und Entlüftung von geschlossenen Flüssigkeits- und Feststoffbehältern oder geschlossenen Gehäusen von Aggregaten aller Art, unter Verwendung einer in eine Öffnung des Behälters bzw. des Gehäuses einsetzbaren, mit einem Adsorptionsmittel gefüllten Patrone.

Aus dem DE-Gm 78 35 933 ist es bei Flüssigkeitsbehältern, z. B. Ölbehältern bekannt, die Luft, die zum Ausgleich des bei Flüssigkeitsentnahme entstehenden Vakuums benötigt wird, über eine in eine Öffnung des Gehäuses einsetzbare Patrone zu leiten, die ein Trockenmittel enthält, damit der in den Behälter eindringenden Umgebungsluft die Feuchtigkeit entzogen und eine Anreicherung der Flüssigkeit mit Wasser verhindert wird. Die bekannte Patrone, die an ihrem unteren, mit einem Gewindestutzen versehenen Ende in eine Öffnung des Behälters einschraubbar ist, besitzt an ihrem oberen Ende ein Einlaßventil, durch das die nachströmende Luft über das Trockenmittel in der Patrone in den Behälter gelangt. Im Gewindestutzen befindet sich ein Überdruckventil, durch das andererseits die beim Füllen des Behälters verdrängte Luft entweichen kann.

Die bekannte Vorrichtung hat den Nachteil, daß beim Füllen des Behälters die aus diesem entweichende, mit Dämpfen der Behälterflüssigkeit beladene Luft in die Patrone eindringen kann, bevor sie durch das Überdruckventil entweicht, so daß das Adsorptions-Mittel in der Patrone unnötig belastet und verschmutzt wird, wodurch eine häufigere Reinigung bzw. Regenerierung erforderlich wird. Der verhältnismäßig große Öffnungsdruck des Überdruckventils schließt ferner den Einsatz bei bestimmten Anwendungsfällen aus. Derartige Vorrichtungen zur Be- und Entlüftung sind nämlich außer bei geschlossenen Flüssigkeits- und Feststoffbehältern auch noch beispielsweise für Getriebe, Hydraulikaggregate, Verbrennungsmotoren, Verdichter etc. erforderlich, wenn der Einsatz in mit Feuchtigkeit oder anderen Schadstoffen behafteter Atmosphäre erfolgt.

Der Erfindung liegt die Aufgabe zugrunde, eine Vorrichtung der im Oberbegriff des Anspruchs 1 genannten Art zu schaffen, die sich durch vielseitige Anwendbarkeit, hohe Betriebsdauer und einfache Handhabbarkeit für den Fall der Regenerierung auszeichnet.

Die gestellte Aufgabe wird gemäß der Erfindung dadurch gelöst, daß zwischen dem Behälter bzw. dem Gehäuse einerseits und der Patrone andererseits ein Ventil-Adapter angeordnet ist, der in einem ein zentrales Rohr umgebenden Ringraum getrennte Ventile für die Be- und Entlüftung enthält, die mit dem Inneren des Behälters bzw. Gehäuses derart in Verbindung stehen, daß das gesamte, in den Behälter einströmende Medium die Patrone durchströmen muß, während das ausströmende Medium, ohne die Patrone zu belasten, aus dem Ventil-Adapter direkt entweicht.

Durch die Erfindung ergibt sich der Vorteil, daß im Ventil-Adapter zwei wechselseitig sperrende Ventile angeordnet werden können und sowohl die Be- als auch die Entlüftung durch den Ventil-Adapter erfolgen kann. Ferner bietet sich die Möglichkeit, im Ventil-Adapter ein Filterelement vorzusehen, so daß eine Regenerierung der Patrone ohne Reinigung oder Wechsel der in dieser befindlichen Filter erfolgen kann. Ferner ermöglicht der Ventil-Adapter, daß nur die Patrone selbst für die Regenerierung auswechselbar ist.

Weitere Merkmale der Erfindung gehen aus den Unteransprüchen hervor.

Nachfolgend wird die Erfindung anhand eines in der Zeichnung dargestellten Ausführungsbeispiels näher erläutert, und zwar zeigt

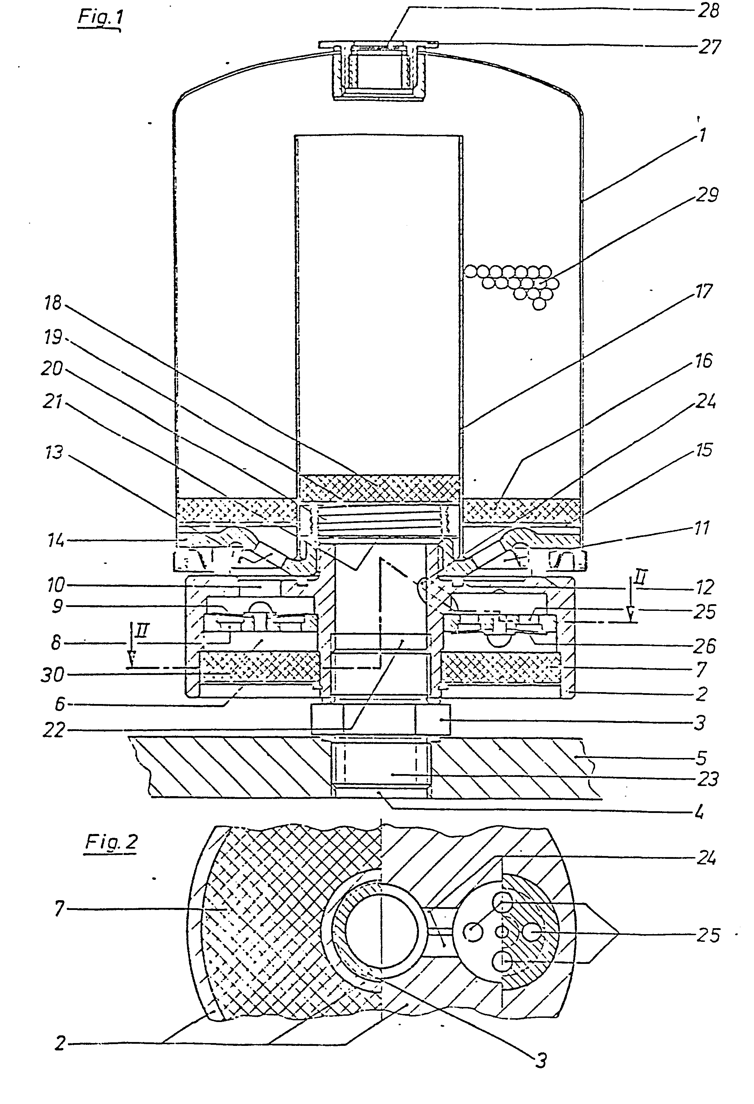

Fig. 1      ein Schnittbild der Be- und Entlüftungsvorrichtung mit dem Ventil-Adapter und
der angeschraubten Patrone

Fig. 2      ein Schnittbild des Ventil-Adapters entsprechend dem in Fig. 1 angegebenen
Schnittverlauf II-II, und

Fig. 3      ein Teilschnittbild des Ventil-Adapters
mit zusätzlichem Sperrventil.

Die erfindungsgemäße Vorrichtung besteht im wesentlichen aus zwei miteinander lösbar verbindbaren Teilen, und zwar aus einem Ventil-Adapter 2 und einer an diesen anschraubbaren Patrone 1, die den Adsorberteil bildet. Der Ventil-Adapter besitzt ein zentrales Rohr 22, an dessen oberes Ende die Patrone 1 anschraubbar ist, während das untere Ende mit einem Stutzen 3 verschraubt ist, der seinerseits mit einer Gewindebohrung 4 der Behälter- bzw. Gehäusewand 5 verschraubt ist. Das Rohr 22 des Ventil-Adapters 2 ist von einem Ringraum 30 umgeben, von dem einander diametral gegenüberliegend zwei zylindrische Hohlräume ausgehen, in denen ein Einlaßventil 9 mit seinen Bohrungen 8 bzw. ein Auslaßventil 26 mit seinen Bohrungen 25 angeordnet ist. Der Ringraum liegt auf der der Patrone 1 abgekehrten Seite der Ventile 9, 26 und mündet über einen Filter-Schaumring 7 und eine diesen stützende Lochblechscheibe 6 in die freie Umgebung, während der der Patrone zugekehrte Teil des mit dem Einlaßventil 9 versehenen Hohlraumes über eine Bohrung 10 im Ventil-Adapter und eine Bohrung 13 in der Endscheibe der Patrone 1 in die Patrone mündet. Zwischen den Bohrungen 10 und 13 wird bei aufgeschraubter Patrone 1 ein Ringraum 11 gebildet, der durch konzentrische Dichtringe 12 nach außen abgedichtet ist.

Die Ventile werden mit nur geringer Kraft geschlossen gehalten und öffnen bereits bei einem Druck von etwa 0,1 Bar.

Aus der Umgebungsatmosphäre bzw. aus mit Gasen oder chemischen Dämpfen beladenen Räumen tritt das dem Behälter bzw. Gehäuse 5 zuzuführende Medium von unten durch die Lochblechscheibe 6 und den von dieser gestützten Filter-Schaumring 7 in die Bohrungen 8 des Einlaßventils 9 ein und steuert dieses auf. Von dort gelangt es durch die Bohrung 10 in den Ringkanal 11 und von dort durch die Bohrungen 13 in der Endscheibe 14 in den Adsorberteil der Patrone 1. Dabei durchströmt das Medium eine am unteren Ende der Patrone angeordnete ringförmige Lochblechscheibe 15 und einen darüberliegenden ringförmigen Filter-Schaumring 16. Die Lochblechscheibe 15 und der Filter-Schaumring 16 umgeben ein Innenrohr 17, dessen Länge nur wenig geringer als die Höhe der Patrone 1 ist. Die Patrone 1 einschließlich des Innenrohres 17 ist mit adsorbierenden Pellets 29 gefüllt, so daß das in die Patrone einströmende Medium durch die Pellets über das Innenrohr 17, durch eine Filter-Schaumscheibe 18 im Innenrohr sowie durch eine Lochblechscheibe 19 im Innenrohr, die durch eine Druckfeder 20 vorgespannt wird und eine Stütz-Lochblechscheibe 21 über das Rohr 22 und die Bohrung 23 im Stutzen 3 in den Behälter bzw. das Gehäuse 5 gelangt.

Die Schließkraft des Auslaßventils 26 wird durch das einströmende Medium unterstützt, so daß ein unmittelbarer Zugang des Mediums in den Behälter 5 verhindert wird. Dadurch ist gewährleistet, daß das gesamte einströmende Medium die Patrone 1 passieren muß, bevor es in den Behälter 5 gelangt.

Die Fixierung der Pellets 29 in der Patrone 1 erfolgt einerseits durch den ringförmigen Filter-Schaumring 16 und die diesen abstützende Lochblechscheibe 15, die auf der Endscheibe 14 der Patrone 1 aufliegt, und andererseits durch die Filter--Schaumscheibe 18, die durch die Lochblechscheibe 19 im Innenrohr 17 abgestützt ist, auf die die Kraft der Druckfeder 20 wirkt, die wiederum über die Lochblechscheibe 21 auf dem Flansch der Endscheibe 14 der Patrone 1 abgestützt ist. Das Innenrohr 17 ist mit der Endscheibe 14 verschweißt.

Das aus dem Behälter bzw. Gehäuse 5 austretende Medium gelangt zunächst in die Bohrung 23 des Stutzens 3 und von dort in das Rohr 22 des Ventil-Adapters 2. Im Rohr 22 ist eine Schrägbohrung 24 angebracht, die einen Zugang in den der Patrone 1 zugekehrten Teil des zylindrischen Hohlraumes schafft, in dem das Auslaßventil 26 angeordnet ist. Von dort gelangt das Medium durch die Bohrungen 25 des Auslaßventils 26 über den Filter-Schaumring 7 und die Lochblechscheibe 6 in die Umgebungsatmosphäre, während das Einlaßventil 9 durch seine Sperrwirkung verhindert, daß das Medium die Patrone durchströmt.

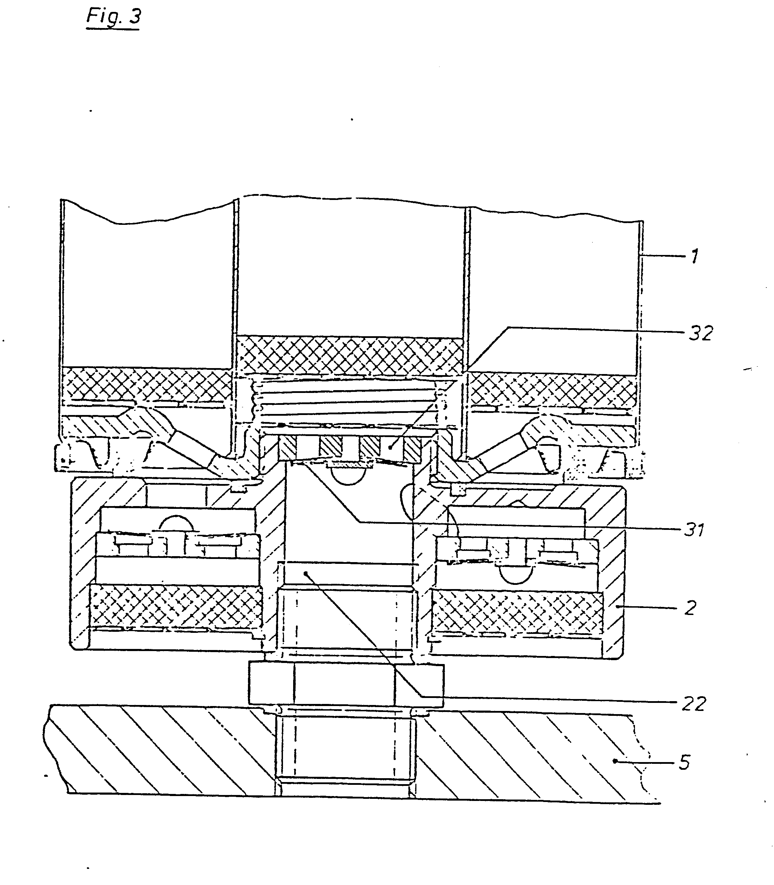

Die geringe Schließkraft des Auslaßventils 26 sorgt weitgehend dafür, daß das Medium über das Rohr 22 nicht in die Patrone gelangt. Um dies vollends auszuschließen, ist es von Vorteil, wenn gemäß Fig. 3 in das Rohr 22 oberhalb der Schrägbohrung noch ein Sperrventil 31 eingesetzt wird, dessen Bohrungen 32 nur aufgesteuert werden, wenn das Medium in den Behälter hineinströmt.

Dadurch, daß bei der erfindungsgemäßen Vorrichtung die Be- und Entlüftung an der Unterseite des Ventil-Adapters erfolgt, ist die Vorrichtung im montierten Zustand gegen Schwall- und Spritzwasser geschützt. Außerdem kann dadurch im Gehäusedom der Patrone 1 ein Schraubeinsatz 27 montiert werden, der mit einem, dem jeweiligen Medium angepaßten Indikator 28 versehen ist, der den Sättigungsgrad der Pellets 29 optisch anzeigt. Dadurch, daß in dem Ventil-Adapter der Filterring 7 vorgesehen ist, werden der Filterring 16 und die Filterscheibe 18 der Patrone weitgehend entlastet, so daß eine Regenerierung der Patrone 1 erfolgen kann, ohne daß zugleich deren Filterelement ausgebaut und gereinigt werden müssen. Dadurch ergibt sich eine hohe Betriebszeit der Patrone 1.

Wie bereits eingangs erwähnt wurde, eignet sich die erfindungsgemäße Vorrichtung nicht nur zur Be- und Entlüftung von Flüssigkeits- bzw. Feststoffbehältern, sondern auch für geschlossene Gehäuse von Aggregaten aller Art, insbesondere von solchen an Getrieben, Hydraulik-Aggregaten, Verbrennungsmotoren, Verdichtern oder dergl.. Durch das Eindringen von in der Umgebungsatmosphäre vorhandenen Schadstoffen und Feuchtigkeit werden z. B. Schmierstoffe mineralischer oder synthetischer Art oder andere Stoffe sehr stark negativ beeinflußt, so daß dadurch das Betriebsverhalten und die Einsatzdauer begrenzt sind. Darüber hinaus führen Feuchtigkeitsgehalte in der Umgebungsatmosphäre bei der Behälter- bzw. Gehäuse-Atmung infolge von Temperatur- oder Volumenschwankungen durch Bildung von z. T. aggressivem Kondensat zu starken Korrosionsschäden an Aggregatbauteilen. Durch geeignete Wahl des Materials für die Pellets können nicht nur organische Flüssigkeiten und verflüssigte Gase getrocknet werden, sondern es ist auch eine Adsorption von Stoffen aus Gasen und Flüssigkeiten möglich, z. B. von $H_2O$, $CO_2$, $H_2S$, $SO_2$, COS, Stickoxiden, leichten Kohlenwasserstoffen, Lösungsmitteldämpfen und Merkaptanen. Die Adsorption kann dabei sowohl statisch als auch dynamisch erfolgen.

Durch den Einsatz der beschriebenen Vorrichtung können z. B. die Standzeiten von Getriebe-Schmierstoffen bis auf das 10-fache der normalen Standzeiten angehoben sowie der innere Aggregate-Verschleiß durch Korrosion verhindert werden.

- 7 -

Patentansprüche
------------------------------

1.      Vorrichtung zur Be- und Entlüftung von geschlossenen
Flüssigkeits- und Feststoff-Behältern oder geschlossenen Gehäusen
von Aggregaten aller Art, unter Verwendung einer in eine Öffnung
des Behälters bzw. des Gehäuses einsetzbaren, mit einem Adsorptions-Mittel gefüllten Patrone, dadurch gekennzeichnet, daß
zwischen dem Behälter bzw. dem Gehäuse (5) einerseits und der
Patrone (1) andererseits ein Ventil-Adapter (2) angeordnet ist,
der in einem ein zentrales Rohr (22) umgebenden Ringraum getrennte Ventile (9, 26) für die Be- und Entlüftung enthält, die mit
dem Inneren des Behälters bzw. Gehäuses (5) derart in Verbindung
stehen, daß das gesamte, in den Behälter einströmende Medium die
Patrone (1) durchströmen muß, während das ausströmende Medium,
ohne die Patrone zu belasten, aus dem Ventil-Adapter (2) direkt
entweicht.

2.      Vorrichtung nach Anspruch 1, dadurch gekennzeichnet,
daß das eine Ende des zentralen Rohres (22) mit einem in den
Behälter bzw. in das Gehäuse (5) eingesetzten Stutzen (3) und das
andere Ende mit der Patrone (1) verschraubt ist.

3.     Vorrichtung nach Anspruch 2, dadurch gekennzeichnet, daß die Ventile (9, 26) einander diametral gegenüberliegend in zylindrischen Hohlräumen angeordnet sind, die von dem Ringraum (30) ausgehen, wobei der Ringraum (30) auf der der Patrone (1) abgekehrten Seite der Ventile (9, 26) liegt und über einen Filter-Schaumring (7) und eine diesen stützende Lochblechscheibe (6) in die freie Umgebung mündet, während der der Patrone (1) zugekehrte Teil eines der zylindrischen Hohlräume mit der Patrone (1) in Verbindung steht, und wobei das Einlaßventil (9) für das einströmende Medium nur seine Bohrungen (8) zur Patrone (1) aufsteuert und der direkte Zugang zum Behälter bzw. Gehäuse (5) durch die Bohrungen (25) des Auslaßventils (26) gesperrt ist, während das Auslaßventil (26) bei ausströmendem Medium über seine Bohrungen (25) die direkte Verbindung zur Umgebungsatmosphäre aufsteuert und die Durchströmung der Patrone (1) durch das geschlossene Einlaßventil (9) verhindert ist.

4.     Vorrichtung nach Anspruch 3, dadurch gekennzeichnet, daß in dem mit der Patrone (1) verschraubten Ende des zentralen Rohres (22) ein weiteres Sperrventil (31) angeordnet ist, dessen Bohrungen (32) nur in Strömungsrichtung zum Behälter (5) aufsteuerbar sind.

5.     Vorrichtung nach Anspruch 4, dadurch gekennzeichnet, daß die Patrone (1) an ihrer dem Ventil-Adapter (2) zugewandten Seite eine Endscheibe (14) aufweist, die mit einer zentralen Gewindebohrung sowie mit um diese in einem Ringbereich liegenden kleineren Bohrungen (13) versehen ist, und bei der die zentrale Gewindebohrung in ein dicht mit der Endscheibe (14) verbundenes, nahezu über die gesamte Höhe der Patrone (1) sich erstreckendes Innenrohr (17) mündet, während die kleinen äußeren Bohrungen (13) in den Ringraum zwischen dem Innenrohr (17) und der Außenwand der Patrone (1) münden.

6.     Vorrichtung nach Anspruch 5, dadurch gekennzeichnet, daß durch die Montage der Patrone (1) auf dem Ventil-Adapter (2) zwischen den Anlageflächen mit Hilfe zweier im Abstand konzentrisch angeordneter Dichtringe (12) ein Ringkanal (11) gebildet ist, über den die Bohrungen (13) und die zur Umgebungsatmosphäre führenden Bohrungen (8, 10) des Ventil-Adapters (2) miteinander in Verbindung stehen.

7.     Vorrichtung nach einem der vorhergehenden Ansprüche, dadurch gekennzeichnet, daß die Patrone (1) mit hochadsorptiven Pellets (29) als Adsorptionsmittel gefüllt ist, wobei die Pellets (29) vor der Endscheibe (14) an einem siebgestützten Filter-Schaumring (16) anliegen und im zentralen Innenrohr (17) zusätzlich durch eine Druckfeder (20) fixiert sind, die über eine Druck-Lochblechscheibe (19) auf die Filter-Schaumscheibe (18) wirkt.

8.     Vorrichtung nach einem der vorhergehenden Ansprüche, dadurch gekennzeichnet, daß die Patrone (1) im Gehäusedom einen Schraubeinsatz (27) besitzt, in dem ein Indikator (28) untergebracht ist, der den Sättigungsgrad der Pellets (29) anzeigt.

9.     Vorrichtung nach einem der vorhergehenden Ansprüche, dadurch gekennzeichnet, daß die Patrone (1) nach Entfernen des Schraubeinsatzes (27) mit dem Indikator (28) mehrfach regenerierbar ist.

Fig.1

1/2

0104420

Fig.2

*Fig. 3*

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl ³) |
|---|---|---|---|
| Y | US-A-3 729 019  (MARVEL ENGINEERING CORP.) * Zusammenfassung; Anspruch 1 * | 1,2 | F 16 K   17/19 F 01 M   13/00 |
| Y | DE-C-  616 257  (K. SIDLO) * Seite 2 - Zeilen 10-24 * | 1 | |
| Y | CH-A-  216 066  (GEBR. BUHLER) * Seite 2, Zeilen 6-15 * | 1 | |
| A | US-A-3 731 678  (P. PYZEL) | | |
| A | US-A-3 265 084  (CATERPILLAR TRACTOR CY.) | | |

RECHERCHIERTE SACHGEBIETE (Int. Cl ³)

F 16 K   17/00
F 01 M   13/00
A 62 B   23/00
A 62 B    7/00

Der vorliegende Recherchenbericht wurde für alle Patentansprüche erstellt.

| Recherchenort | Abschlußdatum der Recherche | Prüfer |
|---|---|---|
| DEN HAAG | 14-12-1983 | DE SMET F.P. |